# EUROPÄISCHE PATENTANMELDUNG

(11) **EP 1 505 813 A2**
(43) Veröffentlichungstag der Anmeldung: **09.02.2005**
(21) Anmeldenummer: 04102600.6
(22) Anmeldetag: 08.06.2004
(51) Int. Cl.: H04M 3/42

(54) **Steuerung eines Anzeigeelementes eines Endgerätes abhängig vom Status eines Zielendgerätes**

(30) Priorität: 04.08.2003 DE 10335619
(71) Anmelder: SIEMENS AKTIENGESELLSCHAFT, 80333 München (DE)
(72) Erfinder: Lederer, Thomas, 81379 München (DE); Schwojer, Georg, 86922 Pflauendorf (DE)

(57) **Zusammenfassung**

Erläutert wird unter anderem ein Verfahren, bei dem ein Anzeigeelement an einem Telefon (120) abhängig von einem Erreichbarkeitsdatum gesteuert wird. Das Erreichbarkeitsdatum wird von einer anderen technischen Einrichtung als dem erreichbare Endgerät erzeugt oder am erreichbaren Endgerät ohne gleichzeitigen Verbindungsaufbau oder Verbindungsabbau, z.B. durch Drücken einer Erreichbarkeitstaste (150). Das Verfahren ermöglicht eine verbesserte Ansteuerung von Anzeigeelementen und verringert die Anzahl vergeblicher Verbindungsaufbauanforderungen erheblich.

## Beschreibung

Die Erfindung betrifft ein Verfahren zum Ansteuern eines Anzeigeelementes an einem Endgerät eines Datenübertragungsnetzes oder eines Telekommunikationsnetzes. Das Endgerät wird im Folgenden auch als Bezugsendgerät bezeichnet. Das Endgerät ist mit mehreren Tasten ausgestattet, über die jeweils eine Verbindung zu einem anderen Endgerät hergestellt werden kann. Diese Tasten werden auch als Kurzwahltasten bezeichnet, da an Stelle einer über mehrere Tasten einzugebenen Ziffernfolge nur eine Taste betätigt werden muss, um einen Verbindungsaufbau zum betreffenden Endgerät zu veranlassen. Jede Taste enthält ein elektronisches oder mechanisches Schaltelement, das beim Drücken der Taste schaltet. Außerdem enthält das Bezugsendgerät mehrere Anzeigeelemente, die jeweils einer Taste zugeordnet sind. Der Betriebszustand des Anzeigeelementes hängt von Eingaben desjenigen Nutzers ab, der auch das über die Taste erreichbare Endgerät benutzt.

Das Verwenden von physikalisch vorhandenen Tasten gestattet es im Gegensatz zu auf einem Bildschirm nur dargestellten Bedienschaltflächen auch die Tasten auf einfache Art zu bedienen. Insbesondere ist keine zusätzliche Fläche zum Auflegen einer sogenannten Computermaus erforderlich. Im Endgerät müssen außerdem nur solche Einheiten realisiert werden, die für den Verbindungsaufbau, für die Übertragung der Nutzdaten und für den Verbindungsabbau unbedingt erforderlich sind.

Aus der DE 101 49 983 A1 ist ein Verfahren zum Ansteuern eines Anzeigeelementes bekannt, mit dessen Hilfe in einem Verbund aus Telekommunikationsanlagen ein Ruf "herangeholt" werden kann. Beispielsweise blinkt ein Anzeigeelement, wenn ein über eine dem Anzeigeelement zugeordnete Taste erreichbares Endgerät gerufen wird. Blinkt das Anzeigeelement längere Zeit, so besteht die Möglichkeit, den ankommenden Ruf auf das Endgerät umzuleiten, auf dem das Anzeigeelement blinkt, weil davon ausgegangen werden kann, dass die ursprüngliche Rufanforderung den gerufenen Teilnehmer nicht erreicht hat. Beispielsweise wird das Verfahren in einer Anlage vom Typ HICOM der Firma Siemens AG ausgeführt. Jedoch können auch Telekommunikationsanlagen anderer Firmen oder auch Steuereinheiten in einem Datenübertragungsnetz verwendet werden.

Die Anzeigeelemente und die Kurzwahltasten werden von vielen Teilnehmern intensiv genutzt und haben damit eine hohe Akzeptanz.

Dennoch ist es Aufgabe der Erfindung, ein verbessertes Verfahren zum Ansteuern eines Anzeigeelementes anzugeben, mit dessen Hilfe insbesondere die Anzahl vergeblich erzeugter Rufanforderungen bzw. die Anzahl von den gerufenen Teilnehmer störenden Rufanforderungen herabgesetzt wird. Außerdem sollen ein Endgerät und ein Programm angegeben werden.

Die Erfindung geht von der Überlegung aus, dass das Ansteuern eines Anzeigeelementes allein abhängig vom vermittlungstechnischen Zustand eines Endgerätes Fehlbedienungen verursachen kann. So wird beispielsweise der ankommende Ruf von einem anderen Teilnehmer umgeleitet, bevor der ursprünglich gerufene Teilnehmer sein Endgerät erreicht.

Deshalb wird beim erfindungsgemäßen Verfahren das Anzeigeelement oder ein Teilbereich des Anzeigeelementes abhängig von einem Erreichbarkeitsdatum gesteuert. Das Erreichbarkeitsdatum wird seinerseits abhängig von Eingaben des Nutzers in eine andere technische Einrichtung als das erreichbare Endgerät erzeugt. Alternativ wird das Erreichbarkeitsdatum am erreichbaren Endgerät ohne gleichzeitigen Verbindungsaufbau oder Verbindungsabbau im Datenübertragungsnetz oder im Telekommunikationsnetz eingegeben. Insbesondere bleibt das Erreichbarkeitsdatum über mehrere Verbindungen hinweg gleich. Durch diese Maßnahme wird erreicht, dass dem Nutzer eines Endgerätes bereits vor dem Erzeugen einer Verbindungsanforderung eine verlässliche Information zur Erreichbarkeit des Nutzers des zu rufenden Endgerätes angezeigt werden kann. Außerdem müssen zur Realisierung des erfindungsgemäßen Verfahrens bekannte Verfahren nur leicht modifiziert werden, beispielsweise über Softwareupdates. Für die Grundform des erfindungsgemäßen Verfahrens müssen auch die Endgeräte nicht verändert werden.

Bei einer Weiterbildung wird als Bezugsendgerät oder als erreichbares Endgerät ein Telefon verwendet, das an eine Telekommunikationsanlage angeschlossen ist oder das in seiner Gehäuseform und in der Anordnung der Bedienelemente einem an einer Telekommunikationsanlage angeschlossenen Endgerät gleicht, jedoch in einem Datenübertragungsnetz arbeitet. Das Bezugsendgerät bzw. das erreichbare Endgerät ist damit ein für die Anwendung "Telefonieren" optimiertes Endgerät, das sich durch eine leichte Bedienbarkeit auszeichnet. Bspw. enthält das Telefon ein Echtzeitbetriebssystem, keinen Massenspeicher für mehrere Gigabyte, wie eine Festplatte, kein CD-ROM-Laufwerk und/oder keinen Anschluss für eine Computermaus.

Bei einer nächsten Weiterbildung ist das Schaltelement mindestens ein metallischer Kontakt, beispielsweise in einem Taster. Alternativ wird als Schaltelement ein Transistor verwendet, beispielsweise ein Bipolartransistor oder ein Transistor mit isoliertem Gate. Der Transistor wird beispielsweise ohne mechanisch verschleißende Bauelemente über einen kapazitiven, resistiven, oder Piezo-Sensor angesteuert, der eine Berührung einer Taste durch einen Finger erfasst.

Bei einer nächsten Weiterbildung ist die elektronische Einrichtung eine durch den Nutzer des erreichbaren Endgerätes neben dem erreichbaren Endgerät benutzte Einrichtung, insbesondere eine Datenverarbeitungsanlage, wie ein Personalcomputer, ein Zeiterfassungssystem oder ein tragbarer Computer.

Die Datenverarbeitungsanlage hat einen Zugang zu einem Datenübertragungsnetz, so dass das Erreichbarkeitsdatum in das erfindungsgemäße Verfahren einbezogen werden kann.

Bei einer nächsten Weiterbildung wird an zentraler Stelle eine Liste gespeichert, in der die Endgeräte vermerkt werden, an die die Änderung eines bestimmten Erreichbarkeitsdatums signalisiert werden soll. Die Änderung eines Erreichbarkeitsdatums wird dann abhängig von dem Stand der Liste an die betreffenden Endgeräte signalisiert. Das Speichern der Liste an zentraler Stelle und das Verwalten der Liste an einer zentralen Stelle ist mit zahlreichen Vorteilen verbunden, beispielsweise hinsichtlich eines widerspruchsfreien Datenbestandes.

Bei einer anderen Weiterbildung wird das Vermerken der Erreichbarkeitsdaten in der Liste und das Erstellen der Liste gemäß CSTA-Standard (Computer Supported Telecommunications Application) ausgeführt, der von der ECMA (European Computer Manufacturer Association) herausgegeben worden ist. Alternativ wird das Erreichbarkeitsdatum mit Meldungen gemäß des SIP-Standards (Session Initiation Protocol) ausgeführt, der von der IETF (Internet Engineering Task Force) erarbeitet worden ist. Eine weitere Möglichkeit ist die Verwendung des von der ITU-T (International Telecommunication Union - Telecommunications Standardization Sector) herausgegebenen Standards H.323 bzw. eines auf diesem Standard aufbauenden Standards. Die genannten Standards sind weit verbreitet, so dass viele bereits vorhandene Einrichtungen die Meldungen bearbeiten können.

Bei einer nächsten Weiterbildung speichert ein zentraler Diensterbringungsrechner die Liste. Dieser Diensterbringungsrechner lässt sich außerhalb einer Telekommunikationsanlage oder auch als Bestandteil einer Telekommunikationsanlage ausführen.

Bei einer alternativen Weiterbildung wird im erreichbaren Endgerät eine Liste gespeichert, in der die Endgeräte angegeben sind, die von einer Änderung des Erreichbarkeitsdatums informiert werden müssen, insbesondere das Bezugsendgerät. Das Endgerät signalisiert die Änderung des Erreichbarkeitsdatums abhängig vom Stand der Liste an die betreffenden Endgeräte. In der Liste sind beispielsweise Rufnummern oder andere Kennzeichen der Endgeräte vermerkt, die von der Änderung des Erreichbarkeitsdatums zu benachrichtigen sind. Das lokale Abspeichern von Listen in jeweils einem Endgerät ermöglicht es, das Verfahren auch ohne eine zentrale Instanz durchzuführen. Auch bei einer lokalen Abspeicherung der Liste lassen sich die oben genannten Standards zur Signalisierung der Änderung des Erreichbarkeitsdatums nutzen.

Bei einer nächsten Weiterbildung werden die folgenden Erreichbarkeitszustände im Erreichbarkeitsdatum vermerkt:
- Nutzer angemeldet bei einem Anwenderprogramm oder Betriebssystem, bspw. wird die Anmeldung von dem Programm auf Grund einer Benutzereingabe automatisch erkannt,
- Nutzer abgemeldet bei einem Anwenderprogramm oder Betriebssystem,
- Nutzer beschäftigt,
- Nutzer in Kürze wieder da,
- Nutzer nicht da,
- Nutzer über Mittag weg,
- Nutzer telefoniert.
   Durch die Signalisierung dieser verschiedenen Erreichbarkeitszustände lässt sich der Zeitpunkt für einen erfolgreichen Verbindungsaufbau auf einfache Art sicher bestimmen.

Gemäß einem weiteren Aspekt der Erfindung wird ein Endgerät angegeben, das insbesondere zur Durchführung des erfindungsgemäßen Verfahrens oder einer seiner Weiterbildungen geeignet ist. Das Endgerät enthält Anzeigeelemente und Tasten, insbesondere Kurzwahltasten. Außerdem enthält das Endgerät einen Telefonhörer oder zumindest einen Anschluss für einen Telefonhörer. Das Endgerät enthält weiterhin ein Gehäuse und ist an einer Telekommunikationsanlage betreibbar oder hat eine Gehäuseform wie ein an einer Telekommunikationsanlage betreibbares Telefon. Das Endgerät hat außerdem eine Taste zur Eingabe eines Erreichbarkeitsdatums ohne gleichzeitigen Verbindungsaufbau oder Verbindungsabbau. Das Erreichbarkeitsdatum wird über eine nur dafür vorgesehene Taste, eine Tastenkombination oder über ein mit Hilfe einer Taste bedienbares Menü eingegeben. Damit kann ein Nutzer des Telefons auf einfache Art und Weise den Wert eines Erreichbarkeitsdatums manuell in das Endgerät eingeben.

Bei einer Weiterbildung enthält das Endgerät mehrere Anzeigeelemente, die jeweils bei einer Taste angeordnet sind, über die jeweils ein anderes Endgerät erreichbar ist. Beispielsweise ist ein Anzeigeelement in der Taste oder neben der Taste angeordnet. Als Anzeigeelemente sind insbesondere LCD-Anzeigen (Liquid Cristal Display) oder LEDs (Light Emitting Diode) geeignet. So gibt es beispielsweise Multicolour- bzw. Mehrfarben-LEDs, die abhängig von der Ansteuerung rot, blau oder grün leuchten. Ein LCD-Element hat den Vorteil, dass mit Hilfe von Symbolen eine Vielzahl von Erreichbarkeitszuständen auf eine sehr einprägsame und sehr verständliche Art dargestellt werden können.

Bei einer alternativen Weiterbildung ist ein Anzeigeelement vorgesehen, vorzugsweise ein LCD-Element, das Anzeigeelementabschnitte enthält, die jeweils neben einer Taste angeordnet sind, über die andere Endgeräte erreichbar sind. Beispielsweise wird neben jeder Zeile des LCD-Elementes eine Taste angeordnet. Durch diese Maßnahme vereinfacht sich der Aufbau des Endgerätes.

Die Erfindung betrifft in einem weiteren Aspekt ein Programm, bei dessen Ausführung durch einen Prozessor das erfindungsgemäße Verfahren oder eine seiner Weiterbildungen ausgeführt werden. Damit gelten die oben genannten technischen Wirkungen auch für das Programm.

Im Folgenden werden Ausführungsbeispiele der Erfindung an Hand der beiliegenden Zeichnungen erläutert. Darin zeigen:
- Figur 1: ein Ausführungsbeispiel mit zentraler Speicherung von Listen zur Signalisierung von Erreichbarkeitsdaten,
- Figur 2: ein Ausführungsbeispiel mit lokaler Speicherung von Listen zur Signalisierung von Erreichbarkeitsdaten,
- Figur 3: Betriebszustände eines Anzeigeelementes abhängig vom Wert eines Erreichbarkeitsdatums, und
- Figur 4: ein Endgerät mit einer Taste zur Eingabe eines Erreichbarkeitsdatums.

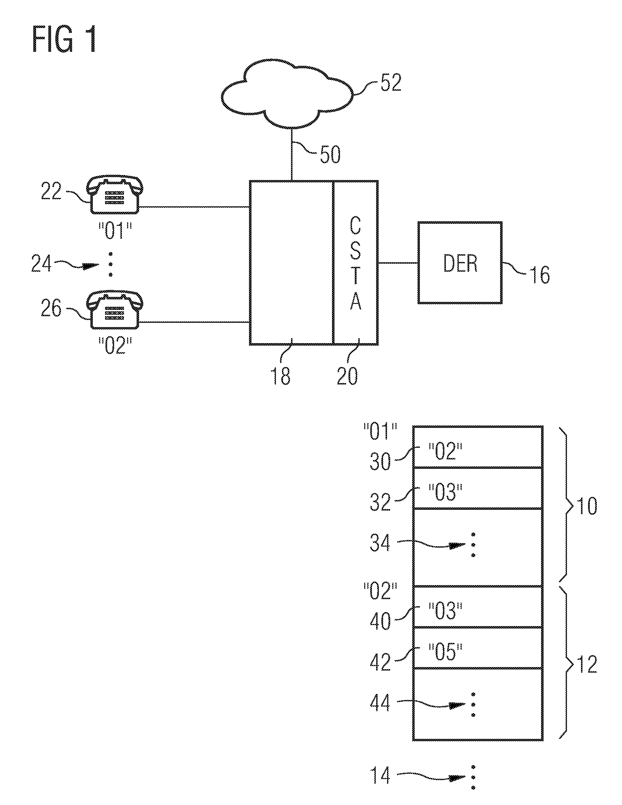

Figur 1 zeigt ein Ausführungsbeispiel mit zentraler Speicherung von Listen 10, 12 und 14 in einem zentralen Diensterbringungsrechner 16. Der Diensterbringungsrechner 16 kommuniziert mit einer Telekommunikationsanlage 18 ist z.B. über eine CSTA-Schnittstelle 20. Die Telekommunikationsanlage 18 ist über eine PCM-Leitung 50 (Pulse Code Modulation) an ein öffentliches Telefonnetz 52 angeschlossen. Bei einem weiteren Ausführungsbeispiel gibt es einen zentralen Diensterbringungsrechner 16 für mehrere Telekommunikations-anlagen 18, d.h. für einen Verbund aus Telekommunikations-anlagen 18.

Die Telekommunikationsanlage 18 ist beispielsweise eine Anlage vom Typ HICOM bzw. vom Typ HiPath der Firma Siemens AG. An die Telekommunikationsanlage 18 sind eine Vielzahl von Telefonen bzw. Endgeräte 22, 24 und 26 angeschlossen. Beispielsweise sind die Telefone 22 bis 26 Telefone vom Typ Optiset der Firma Siemens AG. Im Ausführungsbeispiel ist dem Telefon 22 das Kennzeichen "01" zugeordnet, bspw. seine Rufnummer. Dem Telefon 26 ist das Kennzeichen "02" zugeordnet. Entsprechend der Belegung der Kurzwahltasten des Telefons 22 ist in einem ersten Datenfeld 30 der Liste 10 vermerkt, dass es eine erste Kurzwahltaste zum Telefon 22 mit dem Kennzeichen "02" gibt. In einem zweiten Datenfeld 32 der Liste 10 ist für das Telefon 22 vermerkt, dass es eine zweite Kurzwahltaste zu einem Telefon mit dem Kennzeichen "03" gibt. In weiteren Datenfeldern 34 der Liste 10 sind weitere Kurzwahlziele vermerkt, die sich vom Telefon 22 aus erreichen lassen.

In einem ersten Datenfeld 40 der Liste 12 ist für das Telefon 26 vermerkt, dass das Telefon mit dem Kennzeichen "03" über eine erste Kurzwahltaste erreichbar ist. In einem zweiten Datenfeld 42 der Liste 12 ist vermerkt, dass ein Telefon mit einem Kennzeichen "05" über eine zweite Kurzwahltaste erreichbar ist. In weiteren Datenfeldern 44 der Liste 12 ist vermerkt, zu welchen Telefonen die weiteren Kurzwahltasten des Telefons 26 führen.

Die Listen 10 und 12 sowie die weiteren Listen 14 lassen sich von den Endgeräten 22 bis 26 aus oder zentral erstellen, d.h. insbesondere auch ändern.

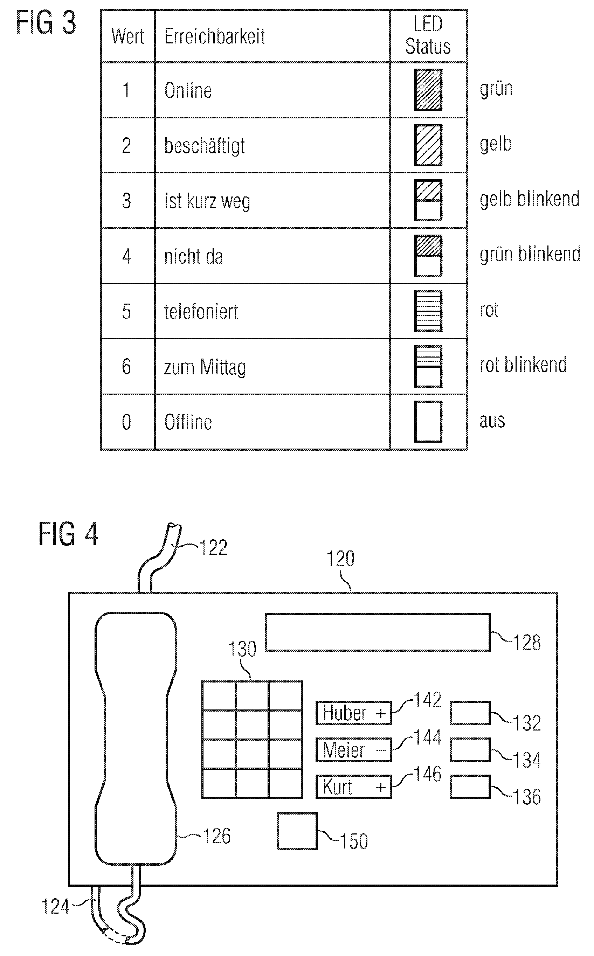

Wie unten an Hand der Figur 4 näher erläutert wird, gibt es an den Telefonen 22 bis 26 jeweils eine Taste, mit der ein das jeweilige Telefon 22 bis 26 nutzender Teilnehmer seine Erreichbarkeit eingeben kann. Wird beispielsweise vom Telefon 22 aus das Bereitschaftsdatum für dieses Telefon 22 geändert, so wird mit Hilfe der Liste 10 ermittelt, dass am Telefon 26 mit dem Kennzeichen "02" und an dem Telefon mit dem Kennzeichen "03" die Änderung des Betriebszustandes des Telefons 22 angezeigt werden muss. Die Änderung der Anzeige wird z.B. unter Verwendung von CSTA-Meldungen zu dem Telefon 26 bzw. zu dem Telefon mit dem Kennzeichen "03" hin signalisiert. Bei dem an Hand der Figur 1 erläuterten Ausführungsbeispiel wird das Erreichbarkeitsdatum in den Listen 10 bis 14 nicht abgespeichert. Dagegen wird das Erreichbarkeitsdatum bei einem anderen Ausführungsbeispiel mindestens einmal in den Listen 10 bis 14 gespeichert. Beispielsweise lässt sich das Erreichbarkeitsdatum für das Telefon 22 in einem Datenfeldkopf der Liste 10 speichern. Alternativ oder zusätzlich kann das Erreichbarkeitsdatum auch in anderen Listen 12 oder 14 hinterlegt werden, wenn dort das Kennzeichen "01" des Endgerätes 22 aufgeführt ist.

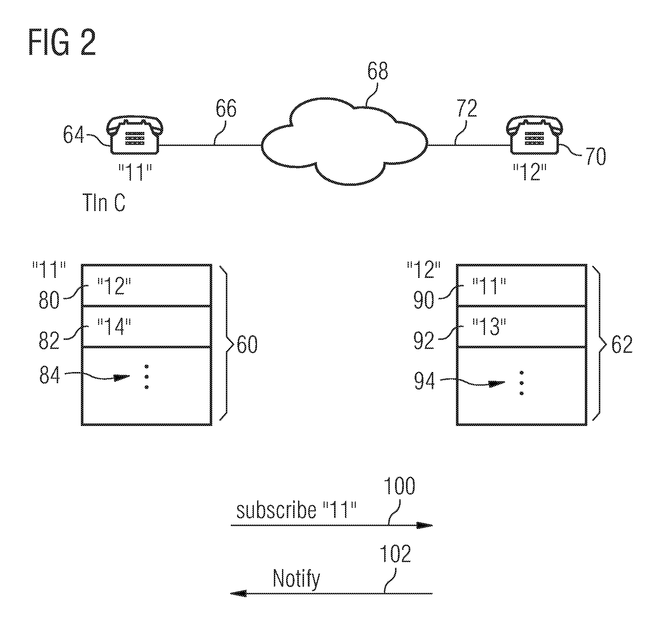

Figur 2 zeigt ein Ausführungsbeispiel mit einer lokalen Speicherung von Listen 60 und 62, die zur Signalisierung von Änderungen eines Erreichbarkeitsdatums verwendet werden. Die Liste 60 wird in einem Endgerät 64 gespeichert, das beispielsweise gemäß SIP (Session Initiation Protocol) arbeitet. Das Endgerät 64 ist über eine Leitung 66 mit einem Datenübertragungsnetz 68 verbunden, beispielsweise mit einem LAN (Local Area Network) oder mit dem Internet. Dem Endgerät 64 ist ein Kennzeichen "11" zugeordnet, bspw. seine Adresse in Datenübertragungsnetz 68.

An dem Datenübertragungsnetz 68 ist ein Endgerät 70 über eine Leitung 72 angeschlossen. Das Endgerät 70 arbeitet ebenfalls gemäß SIP. Dem Endgerät 70 ist ein Kennzeichen "12" zugeordnet.

Die im Endgerät 64 gespeicherte Liste 60 enthält in einem ersten Datenfeld 80 das Kennzeichen "12" des Endgerätes 70. In einem zweiten Datenfeld 82 der Liste 60 ist ein Kennzeichen "14" für ein weiteres -nicht dargestelltes- Endgerät gespeichert. In weiteren Datenfeldern 84 sind weitere Kennzeichen von -nicht dargestellten- Endgeräten gespeichert, die vom Endgerät 64 aus über Kurzwahltasten erreichbar sind.

In einem ersten Datenfeld 90 der Liste 62 ist das Kennzeichen "11" des Endgerätes 64 gespeichert. In einem zweiten Datenfeld 92 der Liste 62 ist ein Kennzeichen "13" eines weiteren Endgerätes gespeichert. In weiteren Datenfeldern 94 der Liste 62 sind weitere Kennzeichen von anderen Endgeräten gespeichert, die mit Hilfe des Endgerätes 70 über Kurzwahltasten erreichbar sind. Demzufolge sind die Endgeräte 64 und 70 für den Dienst "Telefonieren" geeignet. Bei einem anderen Ausführungsbeispiel werden die Endgeräte 64 und 70 auch als Bildtelefone oder als Endgeräte in einer "Konferenzschaltung" mit mehr als zwei Endgeräten genutzt.

Nachdem ein Teilnehmer TlnC einer Kurzwahltaste des Endgerätes 64 das Kennzeichen "12" des Endgerätes 70 zugeordnet hat, wurde im Endgerät 64 automatisch eine Eintragungsmeldung 100 erzeugt und an das Endgerät 72 gesendet. In der Eintragungsmeldung 100 wurde das Kennzeichen "11" übertragen. Dieses Kennzeichen "11" wurde dann im Datenfeld 90 gespeichert. Das Endgerät 72 hat nach dem Empfang der Eintragungsmeldung 100 optional eine Bestätigungsmeldung 102 erzeugt und an das Endgerät 64 gesendet, um den Empfang und die ordnungsgemäße Änderung der Liste 62 zu signalisieren. Die Eintragungsmeldung 100 und die Bestätigungsmeldung 102 wurden gemäß SIP übertragen.

Auch die Endgeräte 64 und 70 enthalten Tasten zur Eingabe eines Erreichbarkeitszustandes außerhalb von vermittlungstechnischen Abläufen. Ändert sich beispielsweise der Wert des Erreichbarkeitsdatums für das Endgerät 64, so wird an Hand der Liste 60 ermittelt, welchen Endgeräten die Änderung zu signalisieren ist. Dar geänderte Wert des Erreichbarkeitsdatums wird in einer Änderungsmeldung an das betreffende Endgerät bzw. die betreffenden Endgeräte übertragen. Gemäß erstem Datenfeld 80 der Liste 60 muss dem Endgerät mit dem Kennzeichen "12", d.h. dem Endgerät 70, die Änderung signalisiert werden. Nach dem Ausführen dieser Signalisierung werden die weiteren Datenfelder 82 bis 84 der Liste 60 abgearbeitet.

Empfängt das Endgerät 70 eine SIP-Meldung über die Änderung eines Betriebszustandes, so kann es an Hand des Absenders feststellen, welches Anzeigeelement gemäß der Änderung anzusteuern ist. Im Ausführungsbeispiel enthält die SIP-Meldung als Absender das Kennzeichen "11", so dass das Anzeigeelement neben der Taste für die Kurzwahl zum Endgerät 64 mit dem Kennzeichen "11" neu angesteuert werden muss.

Bei anderen Ausführungsbeispielen werden in die erläuterten Verfahren Endgeräte einbezogen, die nach untereinander verschiedenen Protokollen arbeiten, d.h. bei dem an Hand der Figur 1 erläuterten Verfahren beispielsweise auch Endgeräte, die gemäß SIP-Protokoll arbeiten bzw. bei dem an Hand der Figur 2 erläuterten Verfahren auch Telefone 22 bis 26, die an eine Telekommunikationsanlage angeschlossen sind. Außerdem lassen sich mobile bzw. zelluläre Kommunikationsendgeräte, Computer, PDA (Personal Digital Assistant) und Notebooks einbeziehen, die über Datenübertragungsnetze bzw. über ein Mobilfunknetz erreichbar sind.

Bei anderen Ausführungsbeispielen wird zusätzlich oder an Stelle der Möglichkeit der Eingabe des Erreichbarkeitsdatums über eine spezielle Taste das Erreichbarkeitsdatum automatisch geändert, beispielsweise abhängig von:
- dem Zustand eines Zeiterfassungssystems, das die Arbeitszeit für einen Teilnehmer erfasst, z.B. für den Teilnehmer TlnC, der sich mit Hilfe einer Chipkarte bei dem Zeiterfassungssystem anmeldet bzw. abmeldet;
- der Anmeldung oder der Abmeldung eines Teilnehmers bei einem neben seinem Endgerät angeordneten Computer, usw.

Figur 3 zeigt Betriebszustände eines Anzeigeelementes, insbesondere einer Mehrfarbenleuchtdiode, abhängig vom Wert eines Erreichbarkeitsdatums. Die verschiedenen Werte der Erreichbarkeitsdaten lassen sich beispielsweise über eine einzige Taste durch mehrfaches Drücken oder über mehrere Tasten bzw. über die Eingabe mit Hilfe eines Computers setzen. Beispielsweise gilt:
- der Wert "1" des Erreichbarkeitsdatums gibt an, dass der betreffende Teilnehmer bei einem Betriebssystem eines Computers angemeldet ist, der neben seinem Endgerät steht, beispielsweise wird eine dieses Erreichbarkeitsdatum darstellende LED so angesteuert, dass sie ohne Unterbrechungen grün leuchtet;
- der Wert "2" des Erreichbarkeitsdatums gibt an, dass der Teilnehmer beschäftigt ist; die Leuchtdiode leuchtet beispielsweise gelb;
- der Wert "3" gibt an, dass der Teilnehmer kurzzeitig nicht erreichbar ist; die Leuchtdiode blinkt beispielsweise gelb;
- der Wert "4" gibt an, dass der Teilnehmer nicht anwesend ist, beispielsweise weil er sich noch nicht bei einem Zeiterfassungssystem angemeldet hat; die Leuchtdiode blinkt grün;
- der Wert "5" gibt an, dass der Teilnehmer gerade telefoniert; die Leuchtdiode leuchtet ohne Unterbrechung rot;
- der Wert "6" gibt an, dass der Teilnehmer aufgrund einer (Mittags-)Pause nicht anwesend ist; die Leuchtdiode blinkt beispielsweise rot; und
- der Wert "0" gibt an, dass der Teilnehmer bei einem Betriebssystem abgemeldet ist bzw. offline arbeitet; die Leuchtdiode ist aus.

Werden statt den o.g. Mehrfarbenleuchtdioden in einer alternativen Ausführungsform Monochromleuchtdioden eingesetzt, wird die Erreichbarkeit beispielsweise in folgender Weise dargestellt
- Anwesend: die Monochromleuchtdiode ist aus,
- Anwesend aber gerade in einem Gespräch bzw. kurzzeitig
   abwesend: Die Monochromleuchtdiode blinkt,
- Abwesend: Die Monochromleuchtdiode ist an.

Bei anderen Ausführungsbeispielen werden weitere bzw. andere Erreichbarkeitszustände berücksichtigt. Bei einem nächsten Ausführungsbeispiel wird an Stelle einer LED ein LCD-Element verwendet, auf dem die Erreichbarkeitszustände mit Hilfe von Buchstaben oder mit Hilfe von Symbolen angezeigt werden.

Figur 4 zeigt ein Telefon 120, das über eine Anschlussleitung 122 oder über eine Funkübertragungsstrecke mit einer Telekommunikationsanlage verbunden ist. Das Telefon 120 hat einen Anschluss für eine Telefonhörerleitung 124, die zu einem Telefonhörer 126 führt. Im Telefonhörer 126 sind ein Mikrofon und ein Fernhörer, d.h. ein kleiner Lautsprecher, enthalten.

Außerdem enthält das Telefon 120 ein Zentraldisplay 128, auf dem beispielsweise die Rufnummer eines rufenden Teilnehmers oder die aktuelle Uhrzeit angezeigt werden. Weiterhin enthält das Telefon 120 ein Tastenfeld 130 mit beispielsweise zwölf Tasten, d.h. Tasten für die Ziffern "0" bis "9" und gegebenenfalls für ein oder zwei Steuertasten, beispielsweise eine "Stern"- oder eine "Raute"-Taste.

Am rechten Rand des Telefons 120 sind drei oder mehr Kurzwahltasten 132, 134 und 136 aufgereiht. Links neben der Kurzwahltaste 132 befindet sich eine LCD-Anzeige 142, auf der der Name des Teilnehmers dargestellt wird, dessen Endgerät über die Kurzwahltaste 132 erreichbar ist, im Ausführungsbeispiel der Name "Huber". Außerdem wird in der LCD-Anzeige 132 durch ein "+" angezeigt, dass der Teilnehmer "Huber" zur Annahme von Gesprächen bereit ist.

Links neben der Kurzwahltaste 134 befindet sich eine LCD-Anzeige 144, in der der Name "Maier" angezeigt wird, d.h. der Name des Teilnehmers, dessen Endgerät mit Hilfe der Kurzwahltaste 134 erreicht werden kann. Ein "-" weist darauf hin, dass der Teilnehmer "Maier" im Moment nicht gestört werden will.

Links neben der Kurzwahltaste 136 befindet sich eine LCD-Anzeige 146, in der der Name eines dritten Teilnehmers vermerkt ist, nämlich des Teilnehmers "Kurt". Der Teilnehmer "Kurt" kann über die Kurzwahltaste 136 erreicht werden. Ein "+" auf der LCD-Anzeige 146 zeigt an, dass der Teilnehmer "Kurt" erreichbar ist.

Weiterhin enthält das Telefon 120 eine Taste 150 oder mehrere Tasten, die nicht für vermittlungstechnische Zwecke verwendet wird, sondern mit deren Hilfe der das Endgerät 120 nutzende Teilnehmer seinen Erreichbarkeitsstatus vorgeben kann. In der Taste 150 befindet sich beispielsweise ein Anzeigeelement, das gemäß dem eingestellten Erreichbarkeitszustand gesetzt wird, siehe beispielsweise Figur 3. Drückt der das Endgerät 120 nutzende Teilnehmer die Taste 150 beispielsweise einmal, so schaltet sie vom Zustand "Aus" in den Zustand "zur Annahme von Gesprächen bereit" um, was beispielsweise durch ein Leuchten der Leuchtdiode in der Taste 150 angezeigt wird. Die Änderung des Erreichbarkeitszustandes wird mit Hilfe der oben an Hand der Figur 1 bzw. 2 erläuterten Verfahren an die anderen Endgeräte signalisiert, die den Erreichbarkeitszustand des Teilnehmers des Endgerätes 120 erfahren wollen. An diesen Endgeräten wird jeweils ein Pluszeichen "+" für den das Endgerät 120 nutzenden Teilnehmer neben dessen Kurzwahltaste gesetzt.

In vorteilhafter Weise wird die Funktionalität der Taste 150 einer Kurzwahltaste 136 zugeordnet. Auf diese Weise ist keine technische Umgestaltung des mit Mitteln der Erfindung auszustattenden Telefons 120 notwendig.

Zusammenfassend gilt, dass sich der Erreichbarkeitsstatus aus einer Vielzahl von Daten oder über eine manuelle Eingabe ermitteln lässt. Durch eine Abbildungsfunktion wird der Wert eines Erreichbarkeitsdatums in eine Displayanzeige oder in die Anzeige einer Leuchtdiode umgesetzt. Das Ermitteln des Erreichbarkeitszustandes und seine Umsetzung in eine Displayanzeige kann erfolgen:
- innerhalb einer Vermittlungsanlage durch einen eigenen Prozess,
- auf einem externen Diensterbringungsrechner durch eine Schnittstelle, beispielsweise mit Hilfe einer CSTA-Schnittstelle,
- auf andere Art und Weise.

Die Abbildungsfunktion bildet den Erreichbarkeitszustand für jede Kurzwahltaste auf eines der folgenden Displayelemente ab:
- Eine Leuchtdiode mit den folgenden kombinierbaren Betriebszuständen:
   - Farben: rot, gelb, grün (im Falle einer Mehrfarbenleuchtdiode)
   - Helligkeit: aus, mittlere Helligkeit, hell,
   - dauernd an bzw. blinkend, gegebenenfalls mit verschiedenen Frequenzen,
- oder mit Hilfe eines sogenannten Self-Labeling-Displays, d.h. eines jeder Namens- bzw. Direktruftaste zugeordneten Minidisplays oder Displayabschnitts. Hierbei werden neben dem Namen des Teilnehmers weitere symbolhafte Darstellungen, beispielsweise "Icons" abgebildet. Sind diese Displays monochrom, lassen sich die bei der Monochromleuchtdiode genannten Möglichkeit nutzen, beispielsweise verschiedene Helligkeiten oder Blinkzustände.

Für alle dargestellten Lösungen gilt, dass für alle wichtigen Gesprächspartner eine optisch sofort erkennbare Anwesenheit bzw. Erreichbarkeitsinformation vorliegt. Geht man davon aus, dass die über die Kurzwahltasten erreichbaren Teilnehmer von bevorzugter Wichtigkeit sind, so ist ein ständiger sichtbarer Präsenzstatus von besonderem Nutzen, insbesondere wenn dieser Status eine sehr verlässliche Information ist. Somit muss nicht erst der Versuch eines Anrufs gemacht werden, um die Erreichbarkeit vom Zentraldisplay 128 abzulesen oder aufgrund anderer Signalisierungen abzuleiten. Das Netz unnötig belastende vergebliche Verbindungsaufbauversuche werden vermieden.

Im Zusammenwirken mit dem Zentraldisplay 120 und der beispielsweise von den Endgeräten von Typ Optiset bzw. vom Typ Optipoint der Firma Siemens AG bekannten Menütechnik sind auch zusätzliche Informationen auswählbar, beispielsweise alternative Anrufziele, wie zelluläre Kommunikationsendgeräte, Voicemail usw. Diese Informationen sind beispielsweise nach Tastendruck am Zentraldisplay sichtbar.

Die technische Realisierung ist denkbar einfach:
- beispielsweise durch Mehrfarbenleuchtdioden, wobei keine Änderungen des Gehäuses im Vergleich zu bisher verwendeten Gehäusen erforderlich sind. Eine Änderung der Platine sowie ein Erweiterung des Ansteuerprotokolls ist jedoch bei komfortablen Varianten erforderlich, um die erweiterte Funktionalität ansteuern zu können und eine leichtere Bedienbarkeit zu gewährleisten. Werden Monochromleuchtdioden eingesetzt, ist kein weiterer technischer Eingriff am Telefon 120 erforderlich, soweit dieses vorher schon mit diesem Leuchtdiodentyp ausgestattet war. Die LED-Variante funktioniert insbesondere auch für ältere Geräte oder für einfache Geräte ohne Display.
- Die Realisierung durch sogenannte Self-Labeling-Display ermöglicht eine sehr einfache Ansteuerung zur Darstellung des Präsenzstatus durch Ergänzen des Zeichensatzes um vordefinierte Symbole.

## Patentansprüche

1. Verfahren zum Ansteuern eines Anzeigeelementes (142), bei dem ein Bezugsendgerät (120) in einem Datenübertragungsnetz (68) oder in einem Telekommunikationsnetz (52) betrieben wird,
bei dem das Bezugsendgerät (120) mit mindestens einer Taste (122) ausgestattet wird, über die ein der Taste (122) zugeordnetes elektronisches oder mechanisches Schaltelement betätigt wird und über die eine Verbindung zu einem erreichbaren Endgerät (26) hergestellt wird,
bei dem das Bezugsendgerät (120) mit mindestens einem Anzeigeelement (142) ausgestattet wird, das vollständig oder von dem ein Teilbereich der Taste (122) zugeordnet wird und dessen Anzeige von Eingaben eines Benutzers abhängt, der auch das erreichbare Endgerät (26) benutzt,
wobei das Anzeigeelement (142) oder der Teilbereich des Anzeigeelementes abhängig von einem Erreichbarkeitsdatum gesteuert wird, das seinerseits abhängig von Eingaben des Nutzers des erreichbaren Endgerätes (26) in eine andere technische Einrichtung als das erreichbare Endgerät (26) erzeugt wird oder das am erreichbaren Endgerät (26) ohne gleichzeitigen Verbindungsaufbau oder Verbindungsabbau einer Verbindung im Datenübertragungsnetz (68) oder im Telekommunikationsnetz (52) eingegeben worden ist.

2. Verfahren nach Anspruch 1, **dadurch gekennzeichnet, dass** als Bezugsendgerät (120) oder als erreichbares Endgerät (26) ein Telefon verwendet wird, das an eine Telekommunikationsanlage (18) angeschlossen ist oder das in seiner Gehäuseform und in der Anordnung der Bedienelemente einem an eine Telekommunikationsanlage (18) angeschlossenen Endgerät gleicht, jedoch in einem Datenübertragungsnetz (68) arbeitet.

3. Verfahren nach Anspruch 1 oder 2, **dadurch gekennzeichnet, dass** das Schaltelement mindestens einen metallischen Kontakt enthält oder dass das Schaltelement ein Transistor ist.

4. Verfahren nach einem der vorhergehenden Ansprüche, **dadurch gekennzeichnet, dass** die andere technische Einrichtung eine durch den Nutzer des erreichbaren Endgerätes (26) neben dem erreichbaren Endgerät benutzte Einrichtung ist, die Zugang zu einem Datenübertragungsnetz (68) hat, insbesondere ein Personalcomputer, ein Zeiterfassungssystem oder ein tragbarer Computer.

5. Verfahren nach einem der vorhergehenden Ansprüche, **dadurch gekennzeichnet, dass** an zentraler Stelle (16) mindestens eine Liste (10 bis 14) gespeichert wird, in der die Endgeräte vermerkt sind, denen die Änderung eines Erreichbarkeitsdatums signalisiert werden soll, und dass Änderungen eines Erreichbarkeitsdatums abhängig von dem Stand der Liste (10 bis 14) an Endgeräte signalisiert werden.

6. Verfahren nach Anspruch 5, **dadurch gekennzeichnet, dass** das Vermerken des Erreichbarkeitsdatums und/oder das Erstellen der Liste gemäß CSTA-Standard oder gemäß SIP-Standard oder gemäß H.323-Standard oder gemäß einem auf einem dieser Standards aufbauenden Standard ausgeführt wird.

7. Verfahren nach Anspruch 5 oder 6, **dadurch gekennzeichnet, dass** ein zentraler Diensterbringungsrechner (16) die Liste (10 bis 14) speichert und die Erreichbarkeitsdaten vermerkt.

8. Verfahren nach einem der Ansprüche 1 bis 4, **dadurch gekennzeichnet, dass** im erreichbaren Endgerät (26) eine Liste gespeichert wird, in der Endgeräte vermerkt sind, an die eine Änderung des Erreichbarkeitsdatums signalisiert werden soll, insbesondere das Bezugsendgerät (120), und dass zum Aktualisieren des Erreichbarkeitsdatums abhängig vom Stand der Liste an die vermerkten Endgeräte Signalisierungsnachrichten gesendet werden.

9. Verfahren nach Anspruch 8, **dadurch gekennzeichnet, dass** zum Erstellen der Liste und/oder zum Signalisieren der Änderung des Erreichbarkeitsdatums Meldungen gemäß CSTA-Standard oder gemäß SIP oder gemäß H.323-Standard oder gemäß einem auf einem dieser Standards aufbauenden Standard verwendet werden.

10. Verfahren nach einem der vorhergehenden Ansprüche, **dadurch gekennzeichnet, dass** mindestens einer der folgenden Erreichbarkeitszustände im Erreichbarkeitsdatum vermerkt ist:
- Nutzer angemeldet bei einem Betriebssystem oder bei einem Anwenderprogramm oder in einem Datenübertragungsnetz,
- Nutzer abgemeldet bei einem Betriebssystem oder bei einem Anwenderprogramm oder in einem Datenübertragungsnetz,
- Nutzer beschäftigt,
- Nutzer in Kürze wieder da,
- Nutzer nicht da,
- Nutzer macht eine Arbeitspause, insbesondere Mittagspause,
- Nutzer telefoniert.

11. Endgerät (120), insbesondere zum Durchführen eines Verfahrens nach einem der vorhergehenden Ansprüche,
mit mindestens einem Anzeigeelement (142 bis 146) mit mindestens einer Kurzwahltaste (132 bis 136),
mit einem Telefonhörer (126) oder einem Anschluss für einen Telefonhörer (126),
und mit einem Gehäuse,
wobei das Endgerät (120) an einer Telekommunikationsanlage (18) betreibbar ist, oder wobei das Endgerät eine Gehäuseform wie ein an einer Telekommunikationsanlage (18) betreibbares Endgerät hat,
wobei mindestens eine Erreichbarkeitstaste (150) im Endgerät (120) enthalten ist, die zum Eingeben eines Erreichbarkeitsdatums ohne gleichzeitigen Verbindungsaufbau oder Verbindungsabbau dient.

12. Endgerät (120) nach Anspruch 11, **dadurch gekennzeichnet, dass** die Taste eine nur zur Eingabe des Erreichbarkeitsdatum in das Endgerät dienende Taste ist, dass die Taste gleichzeitig mit anderen Tasten gedrückt wird, um ein Erreichbarkeitsdatum einzugeben, oder dass mit Hilfe der Taste oder der Tasten ein Menü bedient wird, über das ein Erreichbarkeitsdatum eingegeben wird.

13. Endgerät (120) nach Anspruch 11 oder 12, **dadurch gekennzeichnet, dass** mehrere Anzeigeelemente (142 bis 146) vorgesehen sind, die jeweils bei einer Taste (132 bis 136) angeordnet sind, über die andere Endgeräte (26) erreichbar sind.

14. Endgerät (120) nach Anspruch 13, **dadurch gekennzeichnet, dass** die Anzeigeelemente jeweils eine LCD-Anzeige (142 bis 146) oder jeweils mindestens eine Leuchtdiode sind, vorzugsweise mehrere Leuchtdioden verschiedener Farbe oder eine gemäß verschiedener Farben ansteuerbare Leuchtdiode.

15. Endgerät (120) nach Anspruch 11 oder 12, **dadurch gekennzeichnet, dass** ein Anzeigeelement vorgesehen ist, vorzugsweise ein LCD-Element, das Anzeigeelementabschnitte enthält, die jeweils neben einer Taste (132 bis 136) angeordnet sind, über die andere Endgeräte erreichbar sind.

16. Programm mit durch einen Prozessor ausführbaren Befehlen, **dadurch gekennzeichnet, dass** bei der Ausführung der Befehle des Programms die auf das Bezugsendgerät (120) oder das erreichbare Endgerät (26) bezogenen Verfahrensschritte oder die zum Erstellen der Listen und/oder zum Verändern der Erreichbarkeitsdaten bezogenen Verfahrensschritte ausgeführt werden.
